# EUROPEAN PATENT APPLICATION

(11) **EP 4 641 683 A1**
(43) Date of publication of application: **29.10.2025**
(21) Application number: 24854474.4
(22) Date of filing: 16.08.2024
(51) Int. Cl.: H01M 4/48, H01M 4/525, H01M 4/505, H01M 4/36, H01M 4/583, H01M 10/052, H01M 4/02

(54) **LITHIUM SECONDARY BATTERY**

(30) Priority: 16.08.2023 KR 20230107196; 14.08.2024 KR 20240108709
(71) Applicant: LG Energy Solution, Ltd., Seoul 07335 (KR)
(72) Inventor: CHOI, Junghyun, Daejeon 34122 (KR); SHIN, Sun Young, Daejeon 34122 (KR); LEE, Yong Ju, Daejeon 34122 (KR)
(74) Representative: Hoffmann Eitle
(86) International application number: PCT/KR2024/012164
(87) International publication number: WO 2025/037923

(57) **Abstract**

The present invention relates to a lithium secondary battery comprising: a cathode; an anode; and a separator provided between the cathode and the anode, the cathode comprising, as a cathode active material, lithium composite transition metal compound particles in a single particle form containing nickel, cobalt, and manganese, the anode comprising silicon-based particles as an anode active material, wherein the specific surface area of the silicon-based particles is at least four times that of the lithium composite transition metal compound particles.

## Description

### [Technical Field]

This application claims priority to and the benefit of Korean Patent Application No. 10-2023-0107196 filed in the Korean Intellectual Property Office on August 16, 2023, and Korean Patent Application No. 10-2024-0108709 filed in the Korean Intellectual Property Office on August 14, 2024, the entire contents of which are incorporated herein by reference.

The present invention relates to a lithium secondary battery, and a battery module and a battery pack including the same.

### [Background Art]

Recently, along with the rapid spread of electronic devices using batteries, such as mobile phones, laptop computers and electric vehicles, the demand for small, lightweight, and relatively high-capacity secondary batteries is rapidly increasing. In particular, a lithium secondary battery is in the limelight as a driving power source for portable devices because it is lightweight and has a high energy density. Accordingly, research and development efforts to improve the performance of a lithium secondary battery are being actively conducted.

In general, a lithium secondary battery includes a positive electrode, a negative electrode, a separator interposed between the positive electrode and the negative electrode, an electrolytic solution, an organic solvent, and the like. In addition, the positive electrode and the negative electrode may be formed with active material layers each including a positive electrode active material and a negative electrode active material on current collectors. In general, for the positive electrode, a lithium-containing metal oxide such as LiCoO₂ and LiMn₂O₄ is used as the positive electrode active material, and for the negative electrode, a carbon-based active material or a silicon-based active material that does not contain lithium is used as the negative electrode active material.

Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction during charging and discharging is high, an irreversible capacity is high, and therefore, the initial efficiency is low.

Accordingly, there is a need for a design of materials that can improve battery performance.

### [Detailed Description of the Invention]

### [Technical Problem]

The present invention relates to a lithium secondary battery with improved performance.

### [Technical Solution]

An exemplary embodiment of the present invention provides a lithium secondary battery including: a positive electrode; a negative electrode; and a separator provided between the positive electrode and the negative electrode, wherein the positive electrode includes, as a positive electrode active material, lithium composite transition metal compound particles including nickel, cobalt, and manganese, in the form of single particles, the negative electrode includes silicon-based particles as a negative electrode active material, and a specific surface area of the silicon-based particles is four times or greater than a specific surface area of the lithium composite transition metal compound particles.

According to an exemplary embodiment of the present invention, the silicon-based particles include at least one of silicon-carbon composite particles and silicon oxide particles.

An exemplary embodiment of the present invention provides a battery module including the lithium secondary battery according to the exemplary embodiment described above.

An exemplary embodiment of the present invention provides a battery pack including the lithium secondary battery according to the exemplary embodiment described above.

An exemplary embodiment of the present invention provides a battery pack including the battery module according to the exemplary embodiment described above.

### [Advantageous Effects]

A lithium secondary battery according to an exemplary embodiment of the present invention can provide a lithium secondary battery with a higher capacity by including silicon-based particles as a negative electrode active material, compared to a case where only a carbon-based negative electrode active material is used, and can improve performance of the battery by appropriately matching a positive electrode material with a negative electrode including a silicon-based material at the battery level.

### [Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

In the present specification, the term "single particle" may refer to a particle composed of a single nodule. The "nodule" may be a single crystal without any crystal grain boundaries, or alternatively, it may be a polycrystal in which grain boundaries are not visible when observed at a magnification of 5000× to 20000× using a scanning electron microscope (SEM). In the present specification, the "single particle" includes a quasi-single particle. In the present specification, the "quasi-single particle" may be an agglomerate composed of 30 or fewer nodules. In the present specification, a "secondary particle" refers to a particle formed by agglomeration of several tens to several hundreds of primary particles. More specifically, the secondary particle may include a particle formed by agglomeration of 50 or more primary particles.

In the present specification, a "particle" may include at least one of a single particle, a quasi-single particle, a primary particle, a nodule, and a secondary particle.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

Hereinafter, preferred exemplary embodiments of the present invention will be described in detail. However, it should be understood that the exemplary embodiments of the present invention may be modified in various forms and the scope of the present invention is not limited to the exemplary embodiments described below.

### <Specific Surface Area of Negative Electrode and Positive Electrode Active Material Particles>

According to exemplary embodiments of the present invention, a specific surface area (SSA) of the silicon-based particles included as the negative electrode active material is four times or greater than a specific surface area of the lithium composite transition metal compound particles included as the positive electrode active material. When the lithium composite transition metal compound particle is a single particle, lithium input/output performance is high because the resistance is low. In the above-described exemplary embodiment of the present invention, the specific surface area is designed, considering reactivity of the positive electrode active material of single particles with lithium when using large-capacity silicon-based particles as a negative electrode active material. Specifically, by using silicon-based particles having a large specific surface area within the aforementioned range compared to the lithium composite transition metal compound particles, the silicon-based particles can sufficiently react with lithium ions of the lithium composite transition metal compound particles of single particles. Thus, the battery life performance can be significantly improved. If the specific surface area range described above is not satisfied while using the negative electrode active material particles of silicon-based particles and the positive electrode active material particles of single particles, the lithium-ion reaction becomes concentrated on the negative electrode surface, leading to significant side reactions with the electrolytic solution, resulting in a deterioration (fading) in the life performance.

For reference, lithium composite transition metal compound particles that are not single particles have the relatively lower lithium input/output performance compared to single particles, so it is unlikely that the life performance of the battery can be significantly improved by controlling the specific surface area relationship with the silicon-based particles of the negative electrode according to the present invention.

In an example, the specific surface area of the silicon-based particles is four times or greater, for example, 4.1 times or greater, 4.2 times or greater, or 4.3 times or greater than the specific surface area of the lithium composite transition metal compound particles included as the positive electrode active material. In an example, the specific surface area of the silicon-based particles is 20 times or less, for example, 15 times or less, or 10 times or less than the specific surface area of the lithium composite transition metal compound particles included as the positive electrode active material.

The specific surface area of the positive electrode or negative electrode active material particles can be affected by a particle diameter, surface treatment, a coating structure, a coating material, a coating method, or the like.

According to an exemplary embodiment, the specific surface area of the lithium composite transition metal compound particles in the form of single particles is 0.4 to 0.8 m²/g, for example 0.6 to 0.8 m²/g, or 0.6 to 0.7 m²/g.

According to an exemplary embodiment, the specific surface area of the silicon-based particles, for example, silicon-carbon composites or silicon oxide particles, is 2 m²/g or greater, for example 3 m²/g or greater.

The specific surface area may be measured by performing degassing at 200°C for 8 hours using a BET measuring apparatus (BEL-SORP-MAX, Nippon Bell), and performing N₂ adsorption/desorption at 77 K.

### <Negative Electrode Active Material>

The negative electrode of the lithium secondary battery according to an exemplary embodiment of the present invention includes silicon-based particles as a negative electrode active material.

The silicon-based particles may include at least one of silicon-carbon composite particles and silicon oxide particles. For example, the silicon-based particles may include silicon-carbon composite particles, silicon oxide particles, or both of them.

According to an exemplary embodiment, the silicon-carbon composite may be a Si/C-based active material.

In the present specification, the silicon-carbon composite is a composite of Si and C, and is distinguished from silicon carbide expressed as SiC.

The silicon-carbon composite may be a composite of silicon, graphite, etc., and may form a structure in which a core composite of silicon, graphite, etc. is surrounded by graphene, amorphous carbon or the like. In the silicon-carbon composite, silicon may be nano silicon.

According to an exemplary embodiment, the silicon-carbon composite includes porous carbon-based particles and silicon located on surfaces or in internal pores of the porous carbon-based particles.

According to an exemplary embodiment, the silicon-carbon composite may have a pore volume 0.005 to 0.03 cm³/g as measured by a BET method, and a pore size of 10 to 20 nm as measured by the BET method. The silicon-carbon composite may have a pore volume of 0.005 to 0.03 cm³/g as measured by a mercury penetration method (Hg porosimeter).

According to an exemplary embodiment, the silicon-carbon composite may be manufactured by a method including a step of forming silicon on surfaces and in internal pores of porous carbon-based particles.

The porous carbon-based particles may be manufactured using a method known in the art, and as an example, may be obtained by a method of carbonizing an organic material, such as a petroleum-based material or a polymer, or chemically treating a material found in nature, such as palm tree shells, and then carbonizing the same. As another example, the porous carbon-based particles may be obtained by a method including a step of etching carbon-based particles including internal pores to expand the internal pores of the carbon-based particles.

The step of expanding the internal pores of the carbon-based particles may be performed in a nitrogen (N₂) atmosphere, an oxygen (O₂) atmosphere, or an air atmosphere. Specifically, a flow rate of the oxygen (O₂) or an air containing the oxygen may be controlled to 0.1 L/min to 10 L/min.

The step of expanding the internal pores of the carbon-based particles may be performed at a temperature range of from 400°C to 1200°C for 30 minutes to 4 hours.

Pore characteristics of the obtained porous carbon-based particles may vary depending on conditions for expanding the internal pores of the carbon-based particles.

The step of forming silicon may be performed using a chemical vapor deposition method. In this case, silicon nanoparticles are deposited on the surfaces and/or in the internal pores of the carbon-based particles with expanded internal pores, so that silicon in the form of a film, an island, or a combination thereof may be formed.

The silicon nanoparticles may be crystalline, quasi-crystalline, amorphous, or a combination thereof.

According to an exemplary embodiment, the silicon oxide may include SiOₓ (0≤x<2).

The active material including SiOₓ (0≤x<2) may be a silicon oxide particle including SiOₓ (0<x<2) and a pore.

The SiOₓ (0<x<2) corresponds to a matrix in the silicon oxide particle. The SiOₓ(0<x<2) may be in a form of including Si and SiO₂, and the Si may form a phase.

That is, x corresponds to a ratio of numbers of O to Si included in the SiOₓ (0<x<2). When the silicon oxide particles include the SiOₓ (0<x<2), a discharge capacity of a secondary battery can be improved.

The silicon oxide particles may be general silicon oxide particles that do not include additional metals or metal compounds, and may further include at least one of a Mg compound and a Li compound, as needed. The Mg compound and the Li compound may correspond to a matrix in the silicon oxide particle.

The Mg compound and/or the Li compound may be present in the SiOₓ (0<x<2) and/or on a surface of the SiOₓ (0<x<2). The initial efficiency of the battery can be improved by the Mg compound and/or the Li compound.

The Mg compound may include at least one selected from the group consisting of Mg silicate, Mg silicide, and Mg oxide. The Mg silicate may include at least one of Mg₂SiO₄ and MgSiO₃. The Mg silicide may include Mg₂Si. The Mg oxide may include MgO.

In an exemplary embodiment of the present specification, the Mg element may be included in an amount of 0.1 to 20 wt% or 0.1 to 15 wt% based on 100 wt% of the total silicon oxide particles. Specifically, the Mg element may be included in an amount of 0.5 to 10 wt% or 0.8 to 10 wt%. When the above range is satisfied, the Mg compound can be included in an appropriate content in the silicon oxide particles, so the volume change of the silicon oxide particles during charging and discharging of the battery can be easily suppressed, and the discharge capacity and initial efficiency of the battery can be improved.

The Li compound may include at least one selected from the group consisting of Li silicate, Li silicide, and Li oxide. The Li silicate may include at least one of Li₂SiO₃, Li₄SiO₄ and Li₂Si₂O₅. The Li silicide may include Li₇Si₂. The Li oxide may include Li₂O.

In an exemplary embodiment of the present invention, the Li compound may include a form of lithium silicate. The lithium silicate is represented by LiₐSi_{b}O_{c} (2≤a≤4, 0<b≤2, 2≤c≤5) and may be divided into crystalline lithium silicate and amorphous lithium silicate. The crystalline lithium silicate may be present in the silicon oxide particle in a form of at least one lithium silicate selected from the group consisting of Li₂SiO₃, Li₄SiO₄, and Li₂Si₂O₅, and the amorphous lithium silicate may be in a form of LiₐSi_{b}O_{c} (2≤a≤4, 0<b≤2, 2≤c≤5). However, no such limitation is intended.

In an exemplary embodiment of the present specification, the Li element may be included in an amount of 0.1 to 20 wt% or 0.1 to 15 wt% based on 100 wt% of the total silicon oxide particles. Specifically, the Li element may be included in an amount of 0.5 to 10 wt%, and more specifically, 0.5 to 10 wt%. When the above range is satisfied, the Li compound can be included in an appropriate content in the silicon oxide particles, so the volume change of the negative electrode active material during charging and discharging of the battery can be easily suppressed, and the discharge capacity and initial efficiency of the battery can be improved.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and then performing a conversion such that the sum of the calculated concentrations of the components is equal to a theoretical value, the Mg element or Li element content in the prepared silicon oxide particles can be analyzed.

In an exemplary embodiment of the present invention, the silicon-based particle may include a further metal atom. The metal atom may be present in the form of at least one of a metal atom, a metal silicate, a metal silicide and a metal oxide in the silicon-based particle. The metal atom may include at least one selected from the group consisting of Mg, Li, Al and Ca. Accordingly, initial efficiency of the negative electrode active material may be improved.

In an exemplary embodiment of the present invention, the silicon-based particle is provided with a carbon layer on at least a portion of a surface thereof. In this case, the carbon layer may be coated on at least a portion of the surface, i.e., may be partially coated on the surface of the particle, or may be coated on the entire surface of the particle. Conductivity is imparted to the negative electrode active material by the carbon layer, so that the initial efficiency, life characteristics, and battery capacity characteristics of a secondary battery can be improved.

In an exemplary embodiment of the present invention, the carbon layer includes amorphous carbon. Further, the carbon layer may further include crystalline carbon.

The crystalline carbon may further improve conductivity of the negative electrode active material. The crystalline carbon may include at least one selected from the group consisting of fullerene, carbon nanotubes, and graphene.

The amorphous carbon may appropriately maintain the strength of the carbon layer to suppress expansion of the silicon-based particle. The amorphous carbon may be a carbide of at least one substance selected from the group consisting of tar, pitch, and other organic materials, or a carbon-based material formed by using hydrocarbon as a source of chemical vapor deposition.

The carbide of the other organic materials may be a carbide of an organic material selected from sucrose, glucose, galactose, fructose, lactose, mannose, ribose, aldohexose, ketohexose, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.
In an exemplary embodiment of the present invention, the carbon layer may be an amorphous carbon layer.

In an exemplary embodiment of the present invention, the carbon layer may be included in an amount of 0.1 to 50 parts by weight, 0.1 to 30 parts by weight, or 0.1 to 20 parts by weight based on 100 parts by weight of the total silicon-based particles. More specifically, the carbon layer may be included in an amount of 0.5 to 15 parts by weight, 1 to 10 parts by weight, or 1 to 5 parts by weight. When the above range is satisfied, reduction in capacity and efficiency of the negative electrode active material can be prevented.

In an exemplary embodiment of the present invention, a thickness of the carbon layer may be 1 to 500 nm, and specifically 5 to 300 nm. When the above range is satisfied, the conductivity of the negative electrode active material is improved, the change in volume of the negative electrode active material is easily suppressed, and the side reaction between the electrolytic solution and the negative electrode active material is suppressed, thereby improving the initial efficiency and/or life of the battery.

Specifically, the carbon layer may be formed by chemical vapor deposition (CVD) using at least one hydrocarbon gas selected from the group consisting of methane, ethane and acetylene.

In the present invention, the crystallinity of the carbon layer can be confirmed by calculating the D/G band ratio according to Raman spectroscopy. Specifically, measurements can be made using a Renishaw 2000 Raman microscope system and 532 nm laser excitation, and using a 100x optical lens with a low laser power density and an exposure time of 30 seconds in order to avoid a laser heat effect. In order to reduce a deviation depending on position, a total of 25 points can be determined for a region of 5 µm x 5 µm, and fitted using the Lorentzian function. Thereafter, average values of the D band and G band can be calculated.

In the present specification, the average particle diameter (D50) may be defined as a particle diameter corresponding to 50% of the cumulative volume in the particle diameter distribution curve of particles. The average particle diameter (D50) may be measured using, for example, a laser diffraction method. In the laser diffraction method, in general, particle diameters ranging from a submicron region to several millimeters can be measured, and results with high reproducibility and high resolvability can be obtained.

An average particle diameter (D50) of the negative electrode active material, for example, silicon-carbon composite particles or silicon oxide particles, may be 1 µm or greater and 10 µm or less. When the above range is satisfied, the structural stability of the active material is ensured during charging and discharging, a problem that the level of volume expansion/contraction increases as the particle diameter becomes excessively large can be prevented, and a problem that the initial efficiency is reduced when the particle diameter is excessively small can also be prevented.

### <Negative Electrode>

A negative electrode of a lithium secondary battery according to an exemplary embodiment of the present invention may include the negative electrode active material described above.

Specifically, the negative electrode may include a negative electrode current collector and a negative electrode active material layer arranged on the negative electrode current collector. The negative electrode active material layer may include the negative electrode active material. Furthermore, the negative electrode active material layer may further include a binder, a thickener and/or a conductive material.

The negative electrode active material layer may be formed by applying a negative electrode slurry including a negative electrode active material, a binder, a thickener, and/or a conductive material to at least one surface of a current collector, and drying and roll-pressing the same.

The negative electrode slurry may further include an additional negative electrode active material.

As the additional negative electrode active material, a compound capable of reversible intercalation and deintercalation of lithium may be used. Specific examples include a carbonaceous material such as artificial graphite, natural graphite, graphitized carbon fiber, and amorphous carbon; a metallic substance capable of being alloyed with lithium, such as Si, Al, Sn, Pb, Zn, Bi, In, Mg, Ga, Cd, Si alloys, Sn alloys, or Al alloys; metallic oxides capable of doping and undoping lithium, such as SiO_{β}(0<β<2), SnO₂, vanadium oxide, lithium titanium oxide, and lithium vanadium oxide; or a composite including the metallic substance and the carbonaceous material, such as a Si-C composite or a Sn-C composite, and any one thereof or a mixture of two or more thereof may be used. In addition, a metal lithium thin film may be used as the negative electrode active material. In addition, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite, pyrolytic carbon, mesophase pitch based carbon fiber, meso-carbon microbeads, mesophase pitches, and high-temperature fired carbon such as petroleum- or coal tar pitch-derived cokes.

The additional negative electrode active material may be a carbon-based negative electrode active material.

In an exemplary embodiment of the present invention, the silicon-based particles may be included in an amount of 3 to 30 parts by weight relative to 100 parts by weight of the negative electrode active material.

When the silicon-based particles are included in an amount of 3 to 30 parts by weight relative to 100 parts by weight of the negative electrode active material, the silicon-based particles with a high capacity are included to make the negative electrode thinner, thereby improving the output characteristics, whereby the life characteristics of the secondary battery are improved.

Specifically, when the negative electrode active material includes 3 parts by weight or more of silicon-based particles relative to 100 parts by weight of the negative electrode active material, the negative electrode capacity increases compared to a negative electrode including only a carbon-based active material, thereby making the electrode thinner and improving the output characteristics, which is advantageous. On the other hand, if the content of the silicon-based active material is excessive, the problem of deterioration of the life occurs due to volume expansion. However, when the silicon-based particles are included in an amount of 30 parts by weight or less relative to 100 parts by weight of the negative electrode active material, such a disadvantage is reduced and the life characteristics of the secondary battery are improved. The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

According to an exemplary embodiment of the present invention, the negative electrode slurry may have pH of 7 to 11 at 25°C. When pH of the negative electrode slurry satisfies the above range, the rheological properties of the slurry are stabilized. On the other hand, when pH of the negative electrode slurry is less than 7 or pH of the negative electrode slurry exceeds 11, carboxymethylcellulose (CMC) used as a thickener is decomposed, resulting in lowering in viscosity of the slurry and a decrease in dispersion degree of the active material included in the slurry.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 µm to 20 µm. However, the thickness of the current collector is not limited thereto.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon; metal powders such as aluminum, and nickel powder; a conductive whisker such as zinc oxide and potassium titanate; a conductive metal oxide such as titanium oxide; a conductive material such as polyphenylene derivative, and the like may be used.

The thickener may be carboxymethylcellulose (CMC), but is not limited thereto, and thickeners used in the art may be appropriately adopted.

In an exemplary embodiment of the present invention, the entire negative electrode active materials included in the negative electrode slurry may be included in an amount of 60 to 99 parts by weight, and specifically 70 to 98 parts by weight based on 100 parts by weight of the total solid content of the negative electrode slurry.

In an exemplary embodiment of the present invention, the binder may be included in an amount of 0.5 to 30 parts by weight, and specifically 1 to 20 parts by weight based on 100 parts by weight of the total solid content of the negative electrode slurry.

In an exemplary embodiment of the present invention, the conductive material may be included in an amount of 0.5 to 25 parts by weight, and specifically 1 to 20 parts by weight based on 100 parts by weight of the total solid content of the negative electrode slurry.

In an exemplary embodiment of the present invention, the thickener may be included in an amount of 0.5 to 25 parts by weight, specifically 0.5 to 20 parts by weight, and more specifically 1 to 20 parts by weight based on 100 parts by weight of the total solid content of the negative electrode slurry.

The negative electrode slurry according to an exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In an exemplary embodiment of the present invention, a solid content of the negative electrode slurry may be 20 to 75 parts by weight, and specifically 30 to 70 parts by weight based on 100 parts by weight of the total negative electrode slurry.

### <Positive Electrode Active Material>

A positive electrode of a lithium secondary battery according to an exemplary embodiment of the present invention includes, as a positive electrode active material, lithium composite transition metal compound particles including nickel, cobalt, and manganese, in the form of single particles. Here, the single particle form includes the quasi-single particle form.

The positive electrode active material includes lithium composite transition metal compound particles including nickel (Ni), cobalt (Co), and manganese (Mn), and the lithium composite transition metal compound particles include single particles, an average particle diameter (D50) of the single particles may be 1 µm or greater, and the single particles include single particles each composed of one nodule and quasi-single particles that are agglomerates composed of 30 or fewer nodules.

The lithium composite transition metal compound particles in the form of single particles may be included in an amount of 15 to 100 parts by weight, for example, 50 to 100 parts by weight, or 85 to 100 parts by weight based on 100 parts by weight of the positive electrode active material.

When the average particle diameter (D50) of the single particles is 1 µm or greater, 3 µm or greater, or 5 µm or greater, side reactions of the single particles with the electrolytic solution are reduced, resulting in excellent life performance. According to an exemplary embodiment, the average particle diameter (D50) of the lithium composite transition metal compound particles in the form of single particles may be 1 µm or greater and 10 µm or less.

According to an additional exemplary embodiment of the present invention, the lithium composite transition metal compound particles may include nickel, cobalt, and manganese, and may further include aluminum.

In the present specification, the lithium composite transition metal compound particles may include 80 mol% or more and less than 100 mol% of nickel in metals except lithium, and may include one species or a mixture of two or more species represented by Chemical Formula 1.

[Chemical Formula 1] LiₐNi_{1-b-c-d}Co_{b}Mn_{c}Q_{d}O_{2+δ}

In the Chemical Formula, Q is any one or more elements selected from the group consisting of Na, K, Mg, Ca, Sr, Ni, Co, Ti, Al, Si, Sn, Mn, Cr, Fe, V and Zr, and 1≤a≤1.5, 0<b≤0.5, 0<c≤0.5, 0≤d≤0.1, 0<b+c+d≤20, and - 0.1≤δ≤1.0.

In the lithium composite transition metal compound of Chemical Formula 1, Li may be included in an amount corresponding to a, i.e., 1≤a≤1.5. If a is less than 1, the capacity may be lowered, and if a exceeds 1.5, the particles are sintered in a firing process, making it difficult to manufacture the positive electrode active material. Considering the balance between the improvement in capacity characteristics of the positive electrode active material and the sinterability during the manufacturing of the active material according to the Li content control, Li may be more preferably included in an amount of 1.1≤a≤1.2.

In the lithium composite transition metal compound of Chemical Formula 1, Ni may be included in an amount corresponding to 1-(b+c+d), for example, 0.8≤1-(b+c+d)<1. When the content of Ni in the lithium composite transition metal compound of Chemical Formula 1 is 0.8 or more, an amount of Ni enough to contribute to charge and discharge is secured and high capacity can be promoted. The content of Ni, 1-(b+c+d), may be 0.88 or more, preferably 0.9 or more, and more preferably 0.93 or more. Preferably, the content of Ni, 1-(b+c+d), may be 0.99 or less or 0.95 or less.

In the lithium composite transition metal compound of Chemical Formula 1, Co may be included in an amount corresponding to b, i.e., 0<b≤0.5. If the content of Co in the lithium composite transition metal compound of Chemical Formula 1 exceeds 0.5, there is a concern about cost increase. Considering the remarkable improvement effect in capacity characteristics according to the inclusion of Co, the Co may be more specifically included in a content of 0.03≤b≤0.2.

In the lithium composite transition metal compound of Chemical Formula 1, Mn may be included in a content corresponding to c, i.e., a content of 0<c≤0.5. If c in the lithium composite transition metal compound of Chemical Formula 1 exceeds 0.5, there is a concern that the output characteristics and capacity characteristics of the battery will instead deteriorate, and more specifically, Mn may be included in a content of 0.01≤c≤0.2.

In the lithium composite transition metal oxide of Chemical Formula 1, Q may be a doping element included in a crystal structure of the lithium composite transition metal compound, and Q may be included in a content corresponding to d, i.e., 0≤d≤0.1. Q may be one or two or more selected from Na, K, Mg, Ca, Sr, Ni, Co, Ti, Al, Si, Sn, Mn, Cr, Fe, V, and Zr, and for example, Q may be Al.

The above-described lithium composite transition metal compound may further include secondary particles. The secondary particle refers to a form formed by agglomeration of primary particles, and can be distinguished from the concept of a single particle composed of one nodule or a quasi-single particle, which is an agglomerate composed of 30 or fewer nodules.

According to an additional exemplary embodiment of the present application, the positive electrode active material may include single particles and secondary particles of the lithium composite transition metal compound.

The single particles may be manufactured by mixing and firing a transition metal precursor and a lithium source material. The secondary particles may be manufactured by a method different from that of the single particles, and the composition thereof may be the same as or different from that of the single particles.

For example, the firing is performed at a temperature at which single particles can be formed. To this end, the firing may be performed at a temperature higher than a temperature during manufacture of the secondary particles. For example, when the composition of the precursor is the same, the firing may be performed at a temperature higher than a temperature during manufacture of the secondary particles by about 30°C to 100°C. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material containing a lithium composite transition metal compound in the form of secondary particles may be manufactured, and if the firing temperature exceeds 950°C, excessive firing occurs and a layered crystal structure is not properly formed, so that the electrochemical properties may be deteriorated.

The secondary particle may have a particle diameter (D50) of 1 to 20 µm, 2 to 17 µm, and preferably 3 to 15 µm. The specific surface area (BET) of the secondary particles may be 0.05 to 10 m²/g, preferably 0.1 to 1 m²/g, and more preferably 0.3 to 0.8 m²/g.

In an additional exemplary embodiment, the secondary particle is an agglomerate of primary particles, and an average particle diameter (D50) of the primary particles may be 0.5 to 3 µm. Specifically, the secondary particle may be in an agglomerate form of hundreds of primary particles, and the average particle diameter (D50) of the primary particles may be 0.6 to 2.8 µm, 0.8 to 2.5 µm, or 0.8 to 1.5 µm.

### <Positive Electrode>

According to an exemplary embodiment of the present application, the positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The positive electrode binder may be included in an amount of 0.1 part by weight or more and 50 parts by weight or less, for example, preferably 0.3 part by weight or more and 35 parts by weight or less, and more preferably 0.5 part by weight or more and 20 parts by weight or less on the basis of 100 parts by weight of the positive electrode active material layer.

The conductive material included in the positive electrode active material layer is used to impart conductivity to the electrode, and can be used without particular limitation as long as the conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in an exemplary embodiment, the conductive material may include one or more of a single-walled carbon nanotube (SWCNT) and a multi-walled carbon nanotube (MWCNT). The conductive material may be included in an amount of 0.1 part by weight or more and 2 parts by weight or less, for example, preferably 0.3 part by weight or more and 1.5 parts by weight or less, and more preferably 0.5 part by weight or more and 1.2 parts by weight or less on the basis of 100 parts by weight of the composition for a positive electrode active material layer.

### <Secondary Battery>

A secondary battery according to an exemplary embodiment of the present invention may include the negative electrode, the positive electrode, and a separator interposed between the positive electrode and the negative electrode, and may further include an electrolytic solution.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolytic solution as well as a low resistance to migration of electrolytic solution ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolytic solution may include an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacturing of the lithium secondary battery, but are not limited thereto.

Specifically, the electrolytic solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolytic solution with high electric conductivity may be prepared, and therefore, such a combined use may be more preferable.

A lithium salt may be used as the metal salt, and the lithium salt is a material that is readily soluble in the non-aqueous electrolytic solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂ (CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolytic solution for the purpose of improving life characteristics of the battery, suppressing a decrease in battery capacity, improving discharge capacity of the battery, and the like, in addition to the above-described electrolytic solution components.

Another exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

### Mode for Invention

### <Examples and Comparative Examples>

### Example 1

A composition for forming a positive electrode active material was prepared, including, on the basis of 100 parts by weight of the positive electrode active material, 98.04 parts by weight of a lithium composite transition metal compound of single particles having contents of 93.3 mol% of Ni, 4.9 mol% of Co, and 1.8 mol% of Mn in metals except for lithium, 1 part by weight of PVDF serving as a binder, and a CNT pre-dispersion solution including 0.8 part by weight of CNT serving as a conductive material and 0.16 part by weight of a dispersant. In this case, the single particles were prepared with a size of D50=3 µm by an airflow pulverization method. An aluminum foil having a thickness of 30 µm was coated with the composition for forming a positive electrode active material so as to have a thickness of 103 µm in a dry state, and then dried to prepare a positive electrode.

A composition for forming a negative electrode active material was prepared, including, on the basis of 100 parts by weight of the negative electrode active material, 97.7 parts by weight of graphite (90 parts by weight based on 100 parts by weight of the negative electrode active material) and a silicon oxide active material coated with carbon by methane CVD (10 parts by weight based on 100 parts by weight of the negative electrode active material), 1.15 parts by weight of SBR (styrene-butadiene rubber) as a binder and 1 part by weight of CMC (carboxymethyl cellulose), and further including a CNT pre-dispersion including 0.1 part by weight of a dispersant and 0.05 part by weight of single-walled CNT. In this case, the carbon-coated silicon oxide active material was prepared with a size of D50=6 µm, and the graphite was prepared with a size of D50=17 µm by an airflow pulverization method. A copper foil having a thickness of 15 µm was coated with the composition for forming a negative electrode active material so as to have a thickness of 86 µm in a dry state, and then dried to prepare a negative electrode.

The positive electrode and the negative electrode were stacked with a separator interposed therebetween, and an electrolytic solution (1.0 M LiPF₆, ethylene carbonate (EC)/ethyl methyl carbonate (EMC)=30/70 (vol %), vinylene carbonate (VC) 1.5%) was injected to prepare a battery. For the positive electrode active material and the silicon oxide of negative electrode active material, the specific surface area was measured by performing degassing at 200°C for 8 hours using a BET measuring apparatus (BEL-SORP-MAX, Nippon Bell), and performing N₂ adsorption/desorption at 77K. The measured values were 0.6 m²/g for the positive electrode active material and 3.0 m²/g for the silicon oxide active material.

### Example 2

A battery was prepared in the same manner as in Example 1, except that Mg-containing silicon oxide coated with carbon by methane CVD was used as the silicon-based active material included in the negative electrode active material. The specific surface area of the active material was 0.6 m²/g for the positive electrode active material, and 6.0 m²/g for Mg-silicon oxide active material.

### Example 3

A battery was prepared in the same manner as in Example 1, except that Li-containing silicon oxide coated with carbon by methane CVD was used as the silicon-based active material included in the negative electrode active material. The specific surface area of the active material was 0.6 m²/g for the positive electrode active material, and 3.5 m²/g for Li-silicon oxide active material.

### Example 4

A battery was prepared in the same manner as in Example 1, except that a silicon-carbon composite coated with carbon by methane CVD was used as the silicon-based active material included in the negative electrode active material. The specific surface area of the active material was 0.6 m²/g for the positive electrode active material, and 3.0 m²/g for the silicon-carbon composite active material.

### Example 5

A battery was prepared in the same manner as in Example 1, except that the positive electrode active material was pulverized to D50=3.5 µm. The specific surface area of the active material was 0.7 m²/g for the positive electrode active material, and 3.0 m²/g for the silicon oxide active material.

### Example 6

A battery was prepared in the same manner as in Example 2, except that the positive electrode active material was pulverized to D50=3.5 µm. The specific surface area of the active material was 0.7 m²/g for the positive electrode active material, and 6.0 m²/g for Mg-silicon oxide active material.

### Example 7

A battery was prepared in the same manner as in Example 3, except that the positive electrode active material was pulverized to D50=3.5 µm. The specific surface area of the active material was 0.7 m²/g for the positive electrode active material, and 3.5 m²/g for Li-silicon oxide active material.

### Example 8

A battery was prepared in the same manner as in Example 4, except that the positive electrode active material was pulverized to D50=3.5 µm. The specific surface area of the active material was 0.7 m²/g for the positive electrode active material, and 3.0 m²/g for the silicon-carbon composite active material.

### Comparative Example 1

A battery was prepared in the same manner as in Example 1, except that the silicon-based active material included in the negative electrode active material was silicon oxide having a D50 of 12 µm and coated with carbon by methane CVD. The specific surface area of the active material was 0.6 m²/g for the positive electrode active material, and 1.5 m²/g for Mg-silicon oxide active material.

### Comparative Example 2

A battery was prepared in the same manner as in Example 1, except that the silicon-based active material included in the negative electrode active material was Mg-containing silicon oxide having a D50 of 12 µm and coated with carbon by methane CVD. The specific surface area of the active material was 0.6 m²/g for the positive electrode active material, and 2.0 m²/g for Mg-silicon oxide active material.

### Comparative Example 3

A battery was prepared in the same manner as in Example 1, except that the silicon-based active material included in the negative electrode active material was Li-containing silicon oxide having a D50 of 12 µm and coated with carbon by methane CVD. The specific surface area of the active material was 0.6 m²/g for the positive electrode active material, and 2.0 m²/g for Li-silicon oxide active material.

### Comparative Example 4

A battery was prepared in the same manner as in Example 1, except that the silicon-based active material included in the negative electrode active material was a silicon-carbon composite having a D50 of 12 µm and coated with carbon by methane CVD. The specific surface area of the active material was 0.6 m²/g for the positive electrode active material, and 1.0 m²/g for the silicon-carbon composite active material.

### Comparative Example 5

A battery was prepared in the same manner as in Example 1, except that the silicon-based active material included in the negative electrode active material was silicon oxide having a D50 of 6 µm and coated with carbon using pitch. The specific surface area of the active material was 0.6 m²/g for the positive electrode active material, and 1.8 m²/g for the silicon oxide active material.

### Comparative Example 6

A battery was prepared in the same manner as in Example 1, except that the silicon-based active material included in the negative electrode active material was Mg-containing silicon oxide having a D50 of 6 µm and coated with carbon using pitch. The specific surface area of the active material was 0.6 m²/g for the positive electrode active material, and 2.3 m²/g for Mg-silicon oxide active material.

### Comparative Example 7

A battery was prepared in the same manner as in Example 1, except that the silicon-based active material included in the negative electrode active material was Li-containing silicon oxide having a D50 of 6 µm and coated with carbon using pitch. The specific surface area of the active material was 0.6 m²/g for the positive electrode active material, and 2.0 m²/g for Li-silicon oxide active material.

### Comparative Example 8

A battery was prepared in the same manner as in Example 1, except that the silicon-based active material included in the negative electrode active material was a silicon-carbon composite having a D50 of 6 µm and coated with carbon using pitch. The specific surface area of the active material was 0.6 m²/g for the positive electrode active material, and 1.2 m²/g for the silicon-carbon composite active material.

### Comparative Example 9

A battery was prepared in the same manner as in Example 1, except that the negative electrode active material was artificial graphite. The specific surface area of the active material was 0.6 m²/g for the positive electrode active material, and 0.6 m²/g for the artificial graphite active material.

### Comparative Example 10

A battery was prepared in the same manner as in Example 1, except that the positive electrode active material was secondary particles. The specific surface area of the active material was 0.6 m²/g for the positive electrode active material, and 3.0 m²/g for the silicon-carbon composite active material.

### Comparative Example 11

A battery was prepared in the same manner as in Example 1, except that the positive electrode active material was secondary particles. The specific surface area of the active material was 0.8 m²/g for the positive electrode active material, and 3.0 m²/g for the silicon-carbon composite active material.

### <Experimental Example 1> Evaluation of Life (capacity retention rate) Characteristics

The prepared batteries were charged and discharged to evaluate the capacity retention rate, and the results are shown in Table 1 below.

The charge and discharge were performed at 0.1C for the first cycle and the second cycle, and the charge and discharge were performed at 1.0C from the third cycle. The 300th cycle was terminated in the discharge state (lithium ions were put in the positive electrode).

Charging conditions: CC (constant current)/CV (constant voltage) (4.25 V/0.05 C current cut-off)

Discharging conditions: CC (constant current) condition 2.5V

The capacity retention rate was derived by the following calculation. Capacity retention rate (%) = (300th time discharge capacity/first time discharge capacity) × 100%

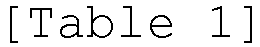

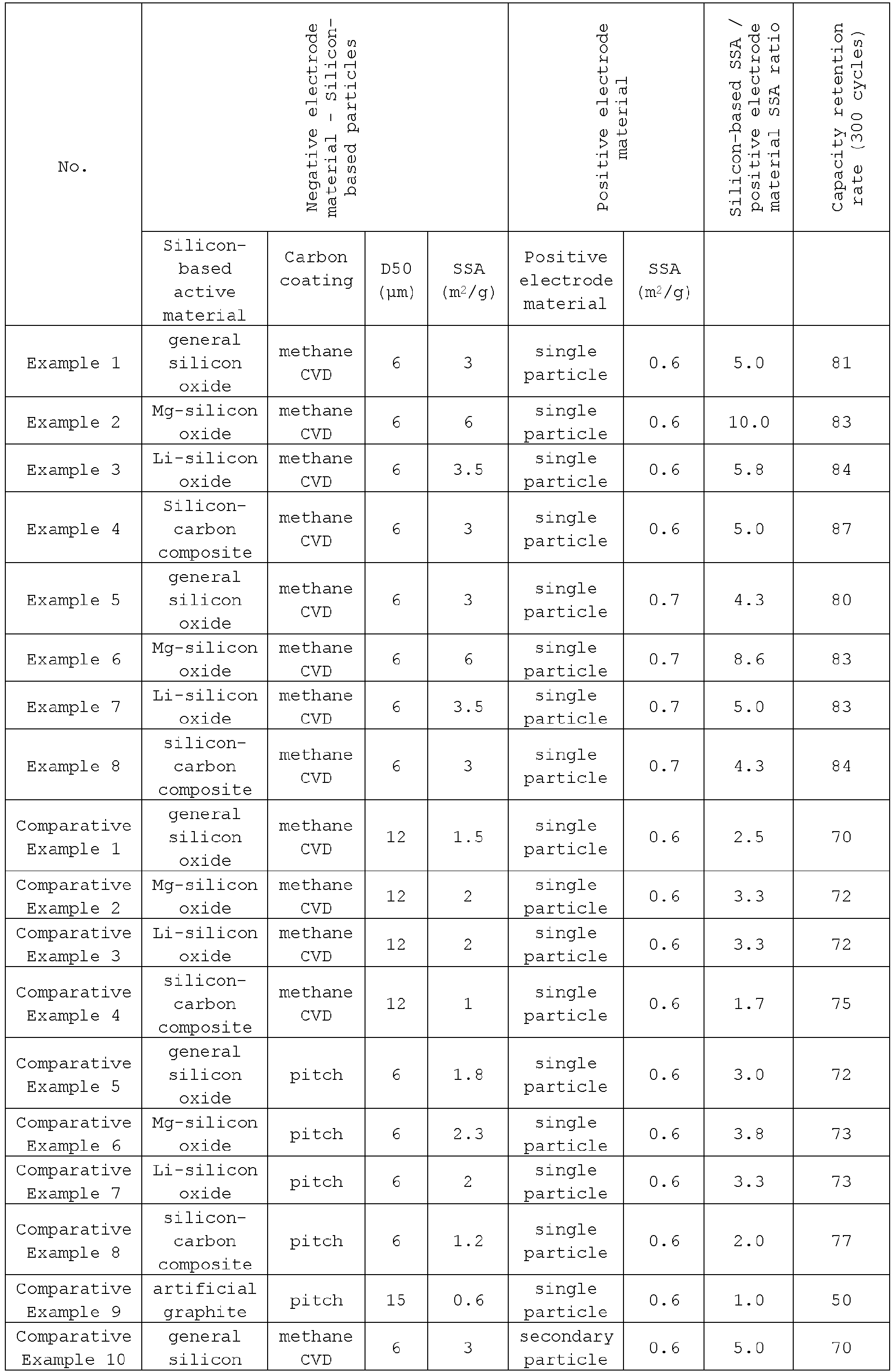

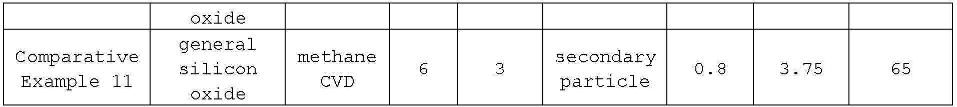

As described in the table, it was confirmed that Examples 1 to 8, in which the specific surface area of the silicon-based particles was 4 times or greater than the specific surface area of the lithium composite transition metal compound particles, exhibited a superior capacity retention rate after 300 cycles compared to Comparative Examples 1 to 9 and 11, in which the specific surface area of the silicon-based particles was less than 4.0 times the specific surface area of the lithium composite transition metal compound particles. Specifically, comparing the capacity retention rates of Example 1, in which the specific surface area of the silicon-based particles was 5.0 times that of the lithium composite transition metal compound particles, and Comparative Example 1, in which the specific surface area of the silicon-based particles was 2.5 times that of the lithium composite transition metal compound particles, the capacity retention rate of Example 1 showed an increase of 12.8%.

It was confirmed that Examples 1 to 8 including silicon-based particles as the negative electrode active material showed the superior capacity retention rate compared to Comparative Example 9 not including silicon-based particles as the negative electrode active material. Specifically, comparing Example 4, which included the silicon-carbon composite as a negative electrode active material, and Comparative Example 9, which included only artificial graphite as a negative electrode active material, the capacity retention rate showed an increase of up to 74%.

In addition, it was confirmed that Examples 1 to 8 using the lithium composite transition metal compound particles in the form of single particles showed the superior capacity retention rates compared to Comparative Examples 10 and 11 using the lithium composite transition metal compounds in the form of secondary particles. Specifically, comparing Example 1 including the lithium composite transition metal compound in the form of single particles and Comparative Example 10 using the lithium composite transition metal compound in the form of secondary particles, the capacity retention rate showed an increase of 12.8%.

Therefore, it was confirmed that by using an active material in which the specific surface area of the silicon-based particles of the negative electrode active material is 4.0 times or greater than the specific surface area of the lithium composite transition metal compound particles of the positive electrode active material, the silicon-based particles can sufficiently react with the lithium ions of the lithium composite transition metal compound particles in the form of single particles, thereby significantly improving the battery life performance.

## Claims

1. A lithium secondary battery comprising:
a positive electrode;
a negative electrode; and
a separator provided between the positive electrode and the negative electrode,
wherein the positive electrode comprises, as a positive electrode active material, lithium composite transition metal compound particles comprising nickel, cobalt, and manganese, in the form of single particles,
wherein the negative electrode comprises silicon-based particles as a negative electrode active material,
and
wherein a specific surface area of the silicon-based particles is four times or greater than a specific surface area of the lithium composite transition metal compound particles.

2. The lithium secondary battery of claim 1, wherein the silicon-based particles comprise at least one of silicon-carbon composite particles and silicon oxide particles.

3. The lithium secondary battery of claim 2, wherein the specific surface area of the lithium composite transition metal compound particles is 0.4 to 0.8 m²/g, and the specific surface area of the silicon-carbon composite or silicon oxide particles is 2 m²/g or greater.

4. The lithium secondary battery of claim 2, wherein the lithium composite transition metal compound particles are included in an amount of 15 to 100 parts by weight relative to 100 parts by weight of the positive electrode active material, and
wherein the silicon-carbon composite particles or the silicon oxide particles are included in an amount of 3 to 30 parts by weight relative to 100 parts by weight of the negative electrode active material.

5. The lithium secondary battery of claim 2, wherein a D50 of the lithium composite transition metal compound particles is 1 µm or greater and 10 µm or less, and
wherein a D50 of the silicon-carbon composite particles or silicon oxide particles is 1 µm or greater and 10 µm or less.

6. A battery module comprising the lithium secondary battery of any one of claims 1 to 5.

7. A battery pack comprising the lithium secondary battery of any one of claims 1 to 5.

8. A battery pack comprising the battery module of claim 6.
